# EUROPEAN PATENT APPLICATION

(11) **EP 3 663 787 A1**
(43) Date of publication of application: **10.06.2020**
(21) Application number: 18210174.1
(22) Date of filing: 04.12.2018
(51) Int. Cl.: G01S 5/02, G01S 19/48

(54) **LOCATION ESTIMATE CORRECTION**

(71) Applicant: HERE Global B.V., 5611 ZT Eindhoven (NL)
(72) Inventor: IVANOV, Pavel, 33100 Tampere (FI); NURMINEN, Henri Jaakko Julius, 33100 Tampere (FI); WIROLA, Lauri Aarne Johannes, 33100 Tampere (FI); SYRJÄRINNE, Jari Tapani, 33100 Tampere (FI)
(74) Representative: Cohausz & Florack

(57) **Abstract**

Inter-alia, a method is disclosed comprising: obtaining or determining a coarse location estimate (202); obtaining an altitude information indicative of a representation of an altitude value (203); obtaining or determining one or more pieces of vicinity information based, at least partially, on the coarse location estimate (204); and determining a set of probable venue estimates based, at least partially, on the coarse location estimate, the altitude information and the one or more pieces of vicinity information (205). It is further disclosed an according apparatus, computer program and system.

## Description

### FIELD OF THE DISCLOSURE

The invention relates to the field of determining a non-GNSS (e.g. indoor) position of a mobile device and more specifically to determine a set of probable venue estimates.

### BACKGROUND

Modern global cellular (GSM (Global System for Mobile Communications), CDMA (Code Division Multiple Access), WCDMA (Wideband CDMA), TD-SCMA (Time Division Synchronous Code Division Multiple Access), LTE (Long Term Evolution), LTE-A (LTE-Advanced), NB-IoT (Narrowband-Internet-of-Things), 5G) and non-cellular (primarily WLAN (Wireless Local Area Network), but also BT (Bluetooth), BLE (BT Low Energy), ZigBee, LoRa (Long Range), etc.) positioning technologies are based on collecting large global databases containing information on the cellular and non-cellular signals. A large portion of this data typically originates from the users of these positioning technologies.

The data from users is typically in the form of fingerprint information, which comprises GNSS (Global Navigation Satellite System)-based or WLAN-based location estimate and the measurements taken from radio interfaces (e.g. cellular, non-cellular). The measurements (e.g. as fingerprint information) may contain respectively comprise:
- Global and/or local IDs (identifiers) of the cellular network cells observed and, possibly,
   - signal strength and/or pathloss estimates;
   - timing measurements (timing advance or Round-Trip Time);
- BSSIDs (Basic Service Set Identifiers) (MAC (Media Access Control address) address of the air interface) of the WLAN access points observed and, possibly,
   - SSIDs (Service Set Identifiers);
   - signal strengths (received signal strength index, physical Rx (reception) level in dBm ref 1 mW, etc.) and/or pathloss estimates;
   - timing measurements (Round-Trip Time).

This data gets uploaded to the server or cloud, where the algorithms are run to generate models (e.g. so-called radio maps) of wireless communication nodes for positioning purposes based on the fingerprint information received from a multitude of users. Such models may be coverage areas, node positions, radio propagation models, Rx fields, etc. In the end, these models are transferred back to the user terminals (e.g. mobile devices) for use in position determination.

Although the end user terminal (e.g. mobile device) had GNSS-capability, the end user can still benefit from using cellular/non-cellular positioning technologies in terms of time-to-first-fix and power consumption. Also, not all applications require highly accurate GNSS-based position (e.g. for local weather application it suffices to use cell-based location estimate). Also, cellular/non-cellular positioning technologies work indoors and in urban canyons, which are generally challenging environments for GNSS-based technologies.

The positioning can function in two modes: The first mode is the terminal-assisted mode, in which a terminal performs the measurements of the cellular and/or non-cellular air interface, provides the measurements to the remote server, which in turn provides the position estimate back to the device.

The second mode is the terminal-based mode, in which the device has a local copy of the radio map (or, most likely, a subset of a global radio map, e.g. a so-called partial radio map). This subset is downloaded by the mobile device from a remote server for the area of interest (e.g. a small area around the current location, or for a whole country, to name but a few non-limiting examples). This subset can also be preinstalled to the mobile device in the factory, but even in that case the data needs to be refreshed at some point.

### SUMMARY OF SOME EXEMPLARY EMBODIMENTS

However, information about WiFi and/or BLE radio nodes location is valuable for localization purposes. Most of the existing global positioning services rely on GPS (Global Positioning System) reference data to estimate the locations or coverage areas of the radio nodes, i.e. crowd-sourcing geographically-tagged radio measurements from the field.

In order to get similarly georeferenced WiFi probe data from indoor spaces information from various sources have to be integrated, such as GNSS, inertial sensors and map matching. While sensors theoretically solve the problem, the main challenge of utilizing sensors for indoor localization is that the estimation process diverges over time, and needs to be re-calibrated with absolute location data (e.g. from maps or GNSS) periodically.

It is thus, inter alia, an object of the invention to achieve a more accurate location estimate, in particular for position determination of (a) mobile device (s) located indoors and/or in urban canyons.

According to a first exemplary aspect of the present invention, a method is disclosed, the method comprising:
- obtaining or determining a coarse location estimate, wherein the coarse location estimate is determined based on a GNSS-measurement and/or one or more pieces of fingerprint information;
- obtaining an altitude information indicative of a representation of an altitude value;
- obtaining or determining one or more pieces of vicinity information based, at least partially, on the coarse location estimate, wherein each vicinity information of the one or more pieces of vicinity information is indicative of a representation of at least one venue altitude information of a venue or of a part of said venue in the vicinity of the coarse location estimate; and
- determining a set of probable venue estimates based, at least partially, on the coarse location estimate, the altitude information and the one or more pieces of vicinity information, wherein the altitude value of the altitude information is compared to the respective one or more representations of altitude values of one or more venues or of one or more parts of said one or more venues as represented by the one or more pieces of vicinity information to enable identification of at least one venue, wherein the set of probable venue estimate is indicative of a location within the identified at least one venue with a certain probability.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by a mobile device, e.g. a mobile terminal. For instance, the method may be performed and/or controlled by using at least one processor of the mobile device.

According to a further exemplary aspect of the invention, a computer program is disclosed, the computer program when executed by a processor causing an apparatus, for instance a server or a mobile device, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc. According to a further exemplary aspect of the invention, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect of the invention may be a module or a component for a device, for example a chip. Alternatively, the disclosed apparatus according to any aspect of the invention may be a device, for instance a server, server cloud, or mobile device. The disclosed apparatus according to any aspect of the invention may comprise only the disclosed components, for instance means, processor, memory, or may further comprise one or more additional components.

According to a further exemplary aspect of the invention, a system is disclosed, comprising:
- at least one apparatus as disclosed above and configured to perform and/or control the method according to the first exemplary aspect of the present invention as disclosed above; and
- at least one (further) mobile device, wherein a positioning request is sent by the at least one (further) mobile device to the at least one apparatus, and wherein the at least one (further) mobile device receives a set of probable venue estimates and/or a refined location estimate as a result of the positioning request from the at least one apparatus.

In the following, exemplary features and exemplary embodiments of all aspects of the present invention will be described in further detail.

Example embodiments of the present invention deal with the improvement for and enable a street address and building identification, e.g. represented at least partially by a set of probable venue estimates, in the positioning phase. This is especially crucial in emergency call positioning in which a highly reliable dispatchable address is needed for emergency responders.

In this way, it is enabled a method to extract additional location information (e.g. based on information of external sources and altitude information, to name but a few non-limiting examples) to be fused with further information, e.g. of GNSS/sensors. Thus, from the fusion of the coarse location information (e.g. determined based on a GNSS-measurement) with altitude data as comprised or represented by the altitude information, one or more pieces of vicinity information (e.g. representing 3D building footprints and/or vertical connectors (such as elevators, stairways, escalators, etc.) in the respective venues (e.g. buildings), it is possible to determine a set of probable venue estimates, which can optionally be utilized to enhance the coarse location estimate to determine a more accurate, thus, refined location estimate for a mobile device.

Thus, example embodiments of the method according to the first exemplary aspect of the present invention enable at least partially based on the coarse location (e.g. of a respective mobile device) to obtain (e.g. get) information about venue altitude information (e.g. of a building) and/or of respective locations of one or more structures of said venue, e.g. one or more vertical connectors in the building. Furthermore, given the altitude value (e.g. of a respective mobile device), it is enabled to deduce a set of probable venue estimates indicative of where a respective mobile device is located, and in some cases even unambiguously identify exactly in which venue (e.g. building) or at which vertical connector in said venue the respective mobile device is located.

The GNSS measurement and/or the one or more pieces of fingerprint information may for instance stem from a mobile device whose location is to be determined (e.g. estimated). The GNSS measurement and/or the one or more pieces of fingerprint information may for instance alternatively stem from another entity that is different from the mobile device, e.g. a server or computer. The mobile device or the entity may for instance desire its location to be determined (e.g. estimated) at least partially based on the GNSS measurement and/or the one or more pieces of fingerprint information that are provided by the mobile device or the other entity to the at least one apparatus configured to perform and/or control the method according to the first exemplary aspect of the present invention.

The GNSS measurement and/or the one or more pieces of fingerprint information may for instance be obtained by receiving the GNSS measurement and/or the one or more pieces of fingerprint information. In this case, the coarse location estimate may for instance be determined at least partially based on the obtained GNSS measurement and/or the one or more pieces of fingerprint information. Alternatively, the coarse location estimate may for instance be obtained (e.g. received) directly, so that the determining of the coarse location estimate may for instance be performed and/or controlled by another device that is different from the at least one apparatus. In one example embodiment, the mobile device may for instance gather the GNSS measurement and/or on the one or more pieces of fingerprint information and then itself determine the coarse location estimate. After the coarse location estimate is determined by the mobile device, this coarse location estimate is output by the mobile device to be obtained by the at least one apparatus.

Such a mobile device may for instance be portable (e.g. weigh less than 5, 4, 3, 2, or 1 kg). The mobile device may for instance comprise or be connectable to a display for displaying information, e.g. a current location of the mobile device that is presented to a user, or additionally a route that is guide/navigated to a user, to name but a few one non-limiting examples. The mobile device may for instance comprise or be connectable to means for outputting sound, e.g. in the form of spoken commands or information. The mobile device may for instance comprise or be connectable to one or more sensors for determining the devices position, such as for instance a GNSS receiver, e.g. in the form of a GPS receiver. The mobile device may for instance comprise or be connectable to one or more sensors, e.g. in the form of a barometer and/or a gyroscope for gathering (e.g. measuring) further information, e.g. altitude information. The mobile device may for instance comprise or be connectable to a receiver and/or a transmitter (e.g. a transceiver) for receiving and/or sending information. For instance, the mobile device may comprise one or more radio receivers (e.g. radio transceivers) to gather one or more pieces of respective fingerprint information, which may for instance enable the method according to the first exemplary aspects of the present invention to be performed and/or controlled. The mobile device may for instance be suitable for outdoor and/or indoor navigation respectively positioning.

The coarse location estimate may for instance have an accuracy of about 100 meters, so that the coarse location is indicative of a rough location estimate, e.g. of the mobile device which may for instance have requested its current location to be determined (e.g. estimated). The coarse location estimate may for instance be not accurate enough, e.g. in indoor location scenarios and/or urban canyons. Thus, example embodiments of the method according to the first exemplary method of the present invention enable to further specify the location, e.g. of the mobile device, based at least partially on the coarse location estimate and the determined set of probable venue estimates.

A respective fingerprint information of the one or more pieces of fingerprint information may for instance comprise or represent one or more measurements of one or more radio signals that are observable at a certain location at which the respective fingerprint information is gathered (e.g. measured). The one or more measurements may for instance be gathered, e.g. by at least one sensor (e.g. also referred to as sensor readings). The at least one sensor may for instance be a radio interface (e.g. a cellular and/or a non-cellular radio interface like corresponding transceivers)). The at least one sensor may for instance be comprised by or connectable to the mobile device. In case the at least one apparatus configured to perform and/or control the method according to the first exemplary aspect of the present invention is a mobile device, the at least one sensor may for instance be comprised by or connectable to this at least one apparatus.

The at least one sensor may for instance be or be part of a radio sensor enabling one or more radio signals to be received, wherein those one or more radio signals are sent (e.g. transmitted) by entities (e.g. base stations) of the cellular and/or by entities (e.g. radio nodes, such as access points or beacons) of the non-cellular network. Such a radio sensor may for instance be a receiver or a transceiver comprising a sender and a receiver, e.g. a so-called transceiver.

One or more measurements may for instance be or represent one or more global and/or local identifiers of cellular network cells observable at the location, where the one or more measurements are gathered. Further, the one or more measurements may for instance be or represent one or more identifiers of one or more radio units (e.g. WLAN access points or beacons, e.g. in the form of a BSSID, a MAC address, or a UUID (Universally Unique Identifier)). Further, the one or more measurements may for instance be or represent a SSID (Service Set Identifier) of the respective radio nodes that are observable at the certain location at which the respective fingerprint information is gathered.

The non-cellular network may for instance be configured according to WLAN-, BT- and/or BLE-, and/or ZigBee specification, to name but a few non-limiting examples. Such a non-cellular network may for instance comprise one or more radio nodes, e.g. as an infrastructure. Such one or more radio nodes may for instance be installed in a specific, thus fixed location in a venue. The one or more measurements may for instance further be indicative of a respective location of the respective radio node in the venue.

The one or more radio nodes may for instance be comprised by a respective venue, e.g. by an infrastructure of the venue. The venue may for instance be a building, shopping mall, office complex, public accessible location (e.g. station, airport, university, public square, or the like), to name but a few non-limiting examples. A respective part of said venue may for instance be a structure or structural element of said venue, e.g. a floor or a section of such a floor, a vertical connector (e.g. stairs, elevator, or escalator, to name but a few non-limiting examples).

A respective radio node of the one or more radio nodes may for instance be a beacon used for indoor positioning and/or floor detection. The radio nodes may for instance be configured according to BT- and/or BLE- specification, or may for instance be Wi-Fi Access Points for indoor positioning and/or floor detection, e.g. according to WLAN-specification. Indoor positioning and/or floor detection may for instance be performed based on a radio map (more details of such a radio map are described below). A respective radio node of the one or more radio nodes may for instance comprise or be connectable to a transceiver, e.g. according to BT-, BLE-, and/or WLAN-specification to provide wireless-based communication.

A respective radio node of the one or more radio nodes of a non-cellular network may for instance transmit one or more signals, wherein the one or more signals may for instance comprise an identifier of the respective radio node. In case one or more transmitted signals of the respective radio node are received, e.g. by the at least one sensor, the respective radio node may for instance be identifiable based at least partially on such an identifier.

The cellular network may for instance be configured according to GSM, CDMA, WCDMA, TD-SCDMA, LTE, LTE-A, and/or 5G specification.

The altitude information may for instance stem from the mobile device whose location is to be determined (e.g. estimated). Such an altitude information may for instance be gathered (e.g. measured) by the mobile device by a barometric sensor that is comprised by or is connectable to the mobile device.

The one or more pieces of vicinity information may for instance be obtained by receiving the one or more pieces of vicinity information, e.g. from one or more devices that are different from the at least one apparatus. Alternatively, the one or more pieces of vicinity information may for instance be determined based on one or more pieces of information that can be utilized to determine the one or more pieces of vicinity information. For instance, such information may be indoor (radio) maps of one or more venues (e.g. buildings). Such an indoor map may for instance be a (e.g. partial) radio map of a floor, or a part of it of a venue, or of the whole venue. In the latter case, such an indoor (radio) map may for instance a global radio map. Of course, such an indoor map may for instance comprise information with respect to more than one venue. For instance, such an indoor map may for instance be generated based on a plurality of pieces of fingerprint information, so that a respective indoor map comprises information of radio fingerprint observation reports enabling a comparison of a respective fingerprint information with corresponding information comprised by or represented by such an indoor map to determine a location estimate as a result of the comparison. Such information may for instance further comprise the horizontal location coordinates of one or more venues. Such information may for instance comprise one or more altitude values associated with one or more venues, e.g. their first floor's or ground level's altitude to name but a few non-limiting examples. Such information comprised by a respective vicinity information may for instance be a respective venue altitude information. Such a venue altitude information may for instance represent at least one of minimum altitude, maximum altitude (e.g. absolute altitude and/or relative altitude, thus, altitude change), minimum height, and maximum height (e.g. absolute height) of a respective venue. Such information may for instance comprise one or more footprint of one or more venues, e.g. three-dimension footprints, e.g. in the form of a polyhedron whose dimensions match with the dimensions of the real venue (e.g. building). One or more footprints of one or more venues may for instance refer to an area (e.g. ground area) that is utilized by the respective venue during construction. Such information may for instance be the basis for determining at least one venue altitude information of a venue or of a part of said venue in the vicinity of the coarse location estimate, in case such a venue altitude information may not be comprised or represented by a respective vicinity information of the one or more pieces of vicinity information. It will be understood that such a respective venue altitude information may for instance be utilized (e.g. combined) further to determine information about one or more heights of a respective venue (e.g. minimum and/or maximum height) of the one or more venues, e.g. height(s) (e.g. minimum and/or maximum height) of floor level(s), or height(s) (e.g. minimum and/or maximum height) of certain structure(s) (e.g. one or more vertical connectors) of the venue, to name but a few non-limiting examples.

Based, at least partially, on the coarse location estimate, the altitude information and the one or more pieces of vicinity information, the set of probable venue estimates is determined. The set of probable venues estimates may for instance be indicative of one or more venues (e.g. of one or more identifiers enabling identification of a certain venue out of the one or more venues). Those identified one or more venues comprised or represented by the set of probable venue estimates may for instance be respective venues, e.g. in which a mobile device requesting its location to be determined is most likely to be located. Further, the set of probable venue estimates may for instance be further indicative of whether or not the location to be determined is inside or outside of the respective (e.g. identified) venue, which enables a more accurate location in urban canyons to be determined.

The certain probability may for instance be indicative of how likely it is that the identified venue is correct. The certain probability may for instance be a value in the range of zero to 1, or a percental value between 0 % and 100 %, to name but a few non-limiting examples. Thus, the set of probable venue estimates is indicative of the uncertainty that may be present when identifying at least one venue within which e.g. the mobile device is located.

According to an exemplary embodiment of all aspects of the present invention, at least a part of the one or more pieces of vicinity information comprises or represents footprint information indicative of at least one footprint of a respective venue of the one or more venues or of at least a part of said respective venue.

Uncertainty, whether or not the set of probable venue estimate is correct or not, may for instance be proportional to the area respectively the size of the area of the at least one footprint. For instance, the smaller the area respectively the size of the area of the at least one footprint is, the more accurate is a (e.g. refined) location estimate, since the location at which the mobile device whose location is to be estimated is located can be identified to be within said area as represented by the at least one footprint.

Thus, the one or more pieces of vicinity information comprises or represents footprint information indicative of at least one footprint of a respective venue of the one or more venues or of at least a part of said respective venue. For instance, a respective piece of information comprises or represents footprint information indicative of at least one footprint of a respective venue, e.g. a building. Another piece of said one or more pieces of vicinity information comprises or represents footprint information indicative of at least one footprint of at least a part of said respective venue, e.g. of an elevator of said respective venue. In the latter case, a (e.g. refined) location estimate is more accurate, since the size of the footprint of said part of the at least one venue - the elevator - is smaller than the footprint of said (entire) venue.

According to an exemplary embodiment of all aspects of the present invention, the at least one footprint of a respective footprint information comprises a two-dimensional and/or three-dimensional representation of the respective venue of the one or more venues or of at least a part of said respective venue, wherein the set of probable venue estimates is further indicative of a more accurate location estimate dependent upon an area as represented by the at least one footprint.

The area as represented by the at least one footprint may for instance be a two-dimensional area. The two-dimensional area may for instance have a polygonal shape. The two-dimensional area may for instance be of a pre-defined size (e.g. of a certain area unit, e.g. m²). The at least one footprint may for instance be defined by a center point of the two-dimensional area, or a corner point, to name but a few non-limiting examples. Additionally, the at least one footprint may for instance be defined by a certain shape and its dimension(s) with respect to the center point (distance(s) from the center point to one or more borders of the two-dimensional area), or a corner point, to name but one non-limiting example.

According to an exemplary embodiment of all aspects of the present invention, at least a part of the one or more pieces of vicinity information comprises or represents at least one pair of coordinates (e.g. x-, y-coordinates, or latitude-, longitude-coordinates) of a respective venue of the one or more venues or of at least a part of the said respective venue.

The pair of coordinates may for instance represent a center point of a respective footprint of the venue or of the at least one part of said venue.

Alternatively, according to an exemplary embodiment of all aspects of the present invention, at least a part of the one or more pieces of vicinity information comprises or represents at least one pair of three-dimensional coordinates (e.g. x-, y-,z-coordinates, or latitude-, longitude-, altitude-coordinates) of a respective venue of the one or more venues or of at least a part of the said respective venue.

According to an exemplary embodiment of all aspects of the present invention, the method further comprises:
- determining a ground level of the respective venue based on the at least one pair of coordinates of the respective venue or of at least a part of said respective venue, wherein the ground level is indicative of a representation of an altitude value of the ground level of the respective venue,
   wherein the set of probable venue estimates is determined further based on the ground level of the respective venue of the one or more venues.

The ground level of the respective venue is determined based on the at least one pair of coordinates of the respective venue or of at least a part of said respective venue. For instance, the at least one pair of coordinates of the respective venue or of at least a part of said respective venue may for instance be used to obtain the ground level out of a database, e.g. provided by an external source. Such an external source is described below in this section in more details. Such an external source may for instance provide an altitude map, and/or an indoor map associated with or comprising the respective venue or of at least a part of said respective venue, and, further, may for instance comprise information to determine or obtain (e.g. directly) the ground level of the respective venue or of at least a part of said respective venue. The set of probable venue estimates is determined by a comparison of the altitude information as gathered by the same mobile device that also gathered the GNSS measurement (or alternatively: a plurality of GNSS measurements) and/or the one or more pieces of fingerprint information, so that the altitude information may for instance enable to be analyzed with respect to the ground level of the building. This may for instance enable to determine whether or not the mobile device which location is to be determined is located above, below or equal to the ground level of the respective venue or of at least a part of said respective venue. Then, based on the comparison, logical operation(s) may be performed, and the result may for instance be indicative whether or not it is probable that the mobile device is located within the respective venue or within at least a part of said respective venue (e.g. a certain floor or floor section, to name but a few non-limiting examples), or if the mobile device may for instance be located outside of the venue, e.g. within a neighboring venue (e.g. since according to the altitude information, the mobile device's altitude has changed more than it is possible according to the maximum height of the venue, to name but one non-limiting example).

According to an exemplary embodiment of all aspects of the present invention, at least a part of the one or more pieces of vicinity information comprises or represents at least one structure comprised by a respective venue of the one or more venues or representing a part of said venue.

According to an exemplary embodiment of all aspects of the present invention, at least the part of the respective venue represents the structure of the respective venue.

According to an exemplary embodiment of all aspects of the present invention, the structure of the respective venue is at least one of the following structures i) to iii):
i) at least one vertical connector of the respective venue connecting at least two different floors of the venue with each other;
ii) a floor of the respective venue or at least a part of the floor; and
iii) a number of spanned floors of the respective venue or of a part of said respective venue.

The at least one vertical connector of the respective venue may for instance be an elevator, an escalator, stairs, a ramp, or the like, to name but a few non-limiting examples. Thus, the at least one vertical connector may for instance be related to a type of interconnection of at least two floors or floor sections of the venue (e.g. building).

The floor or at least a part of the floor may for instance be one or more floor(s) or floor section(s) having completely open vertical structure, e.g. a floor section with no floor and/or ceiling. Alternatively, the floor or at least a part of the floor may for instance have (in particular heavy) structure, e.g. having a closed structure, such as a parking garage or a floor or a part of the floor with solid walls, to name but a few non-limiting examples.

The number of spanned floors of the respective venue may for instance be indicative of a certain space inside of the venue or of a part of said respective venue, such as an atrium, lobby, hall, or the like to name but a few non-limiting examples.

According to an exemplary embodiment of all aspects of the present invention, the one or more pieces of vicinity information are determined based on information provided by one or more external sources.

Such one or more external sources may for instance be one or more databases comprising information, which can be utilized to determine the one or more pieces of vicinity information. Such information may for instance comprise information associated with a certain venue of the one or more venues. The one or more external sources may for instance be accessible e.g. via the Internet. Thus, the one or more external sources may for instance provide information associated with one or more venues so that information on said venues in the vicinity of the coarse location estimate may for instance be determined. Then, e.g. in a further step/action, the information obtained (e.g. requested via an API) from the one or more external sources and which may be related to at least one venue of one or more venues in the vicinity according to the coarse location estimate may for instance be used to determine the one or more pieces of vicinity information that are utilized by the method according to the first exemplary aspect of the present invention.

For instance, as an external source, online map services may for instance be used, to name but one non-limiting example. Furthermore, e.g. altitude information indicative of one or more absolute altitude values of one or more venues (e.g. buildings) may for instance be obtained or determined. Further, one or more parts of said venues (e.g. vertical connectors) may for instance not necessarily be available within such one or more external sources (e.g. online sources), but may for instance be comprised by such online map services in the future, to name but one non-limiting examples.

According to an exemplary embodiment of all aspects of the present invention, the altitude information and/or the at least one venue altitude information is represented by an absolute or relative altitude value, and optionally, wherein the altitude information is obtained based on information gathered by a barometric sensor, a GNSS sensor and/or an altitude map.

A respective altitude value that is represented by the altitude information and/or by the at least one venue altitude information may for instance be an absolute altitude value representing an altitude relative to a pre-defined level, e.g. sea level to name but one non-limiting example. Such a altitude value that is represented by the altitude information and/or by the at least one venue altitude information may for instance be a relative altitude value representing a change of altitude from a first time point to a second time point, to name but one non-limiting example.

The at least one venue altitude information may for instance be a representation of a minimum and/or maximum altitude value of the respective venue. Additionally or alternatively, the at least one venue altitude information may for instance be a representation of a minimum and/or maximum height of the respective venue, or of a part of the respective venue (e.g. such as at least one vertical connector, a floor of the respective venue or at least a part of the floor, a number of spanned floors of the respective venue or of a part of said respective venue, to name but a few non-limiting examples).

For instance, the at least one venue altitude information may for instance be utilized to compare the altitude of the mobile device (e.g. represented by the altitude information) with the altitude value(s) of the respective venue, e.g. altitude of the ground level, and/or height of the respective venue, to name but a few non-limiting examples.

For instance, an altitude map may comprise information of absolute and/or relative altitude values (e.g. representations of altitude values) associated with or linked to certain locations or between certain locations of the map.

Further, a relative altitude value represented by the altitude information indicative of an altitude change may for instance be determined (e.g. computed) from barometric information gathered by a barometric sensor respectively barometer, to name but one non-limiting example. Absolute altitude values represented by the altitude information may for instance be determined (e.g. computed), e.g. based on one or more GNSS measurements, barometric information and/or altitude map data, to name but a few non-limiting examples.

According to an exemplary embodiment of all aspects of the present invention, the determining of the set of probable venue estimate further comprises:
- if the altitude information represents an absolute altitude value:
   determining at least one venue or at least a part of said at least one venue in which a respective mobile device, whose coarse location estimate is obtained or determined, is located based on a comparison of a respective venue altitude information (e.g. maximum altitude) height of a respective venue or of a part of said respective venue of each of the one or more pieces of vicinity information with the altitude information (e.g. of the mobile device, in particular absolute altitude of the mobile device); and
- if the altitude information represents a relative altitude value:
   determining at least one venue or at least a part of said at least one venue in which a respective mobile device, whose coarse location estimate is obtained or determined, is located based on a comparison of an altitude change as represented by the relative altitude value of the altitude information with a respective venue altitude information of a respective venue or of a part of said respective venue of each of the one or more pieces of vicinity information, and/or with an altitude change as enabled by the respective venue or a part of said respective venue (e.g. change of altitude linked to a change of floors of the building, or pre-defined change as provided by a certain structure of the building, e.g. stairs, escalator, and/or elevator equals a certain pre-defined altitude change).

For instance, if the altitude information represents an absolute altitude value, simply by excluding venues or part(s) of said venues whose maximum height respective altitude is lower than the absolute altitude of the mobile devise as represented or comprised by the altitude information can be performed, since it is not possible that the mobile device is located in such venues or parts of said venues.

Further, if the altitude information represents a relative altitude value, simply by excluding venues or part(s) of said venues whose maximum altitude change respective altitude is lower than the change of altitude as represented by the relative altitude value of the altitude information may be performed, since it is not possible that the mobile device is located in such venues or parts of said venues having a lower maximum absolute altitude change (to name but one non-limiting example) than the one represented by the altitude information as the change of altitude performed by the mobile device. Further, by excluding outdoor areas - thus, not venues or part(s) of said venues - may be performed in case the change of altitude performed by the mobile device, and which is represented by the altitude information, is indicative of a change of altitude that is only possible when being located inside of the venue (e.g. building), e.g. due to a floor change to name but one non-limiting example.

According to an exemplary embodiment of all aspects of the present invention, the method further comprises:
- outputting the set of probable venue estimates for usage in location-based services, wherein all outdoor areas are excluded from consideration during a localization performed by the location-based services, and/or a search space for determining a location estimate is reduced to an identified venue as represented or comprised by the set of probable venue estimates enabled by the set of probable venue estimates.

For instance, the set of probable venue estimates may be output to a positioning server or a location-based service, which can then utilize the set of probable venue estimates for determining a location estimate. Alternatively, the set of probable venue may be output to a mobile device, which can then utilize the set of probable venue estimates for determining a location estimate. In this case, the method according to the first exemplary aspect may for instance be performed and/or controlled by a server, e.g. a positioning server.

Further, the set of probable venue estimate may for instance be output as a result of a receiving of a positioning request, e.g. from a mobile device, which may for instance be an optional step respectively action that is performed and/or controlled by example embodiments of the present invention.

According to an exemplary embodiment of all aspects of the present invention, the method further comprises:
- determining a refined location estimate based, at least partially, on the set of probable venue estimates and the coarse location estimate.

For instance, the refined location estimate may be output after it is determined. In case the determining of the refined location is performed and/or controlled, the method according to the first exemplary aspect may for instance be performed and/or controlled by a mobile device, and/or a server (e.g. a positioning server).

Further, the refined location estimate may for instance be output as a result of a received of a positioning request, e.g. from a mobile device.

The determining of the refined location estimate may for instance be a localization respectively location estimation. The refined location estimate may for instance be performed and/or controlled at least partially based on a Kalman filter or a particle filter.

According to an exemplary embodiment of all aspects of the present invention, in case at least two respective venues or at least two parts of a respective venue that is identified as represented by the set of probable venue estimate, the method further comprises:
- selecting a respective venue based on the at least two respective venues or at least two parts of a respective venue to be the most probable based on a distance from the coarse location estimate to said at least two respective venues or at least two parts of a respective venue.

For instance, in case two venues are comprised or represented by the set of probable venue estimates, it may for instance be determined which of those two venues is considered to be the one in which e.g. the mobile device requesting its location to be determined is located. For instance, the venue may for instance be selected which is closest to the location as represented by the coarse location estimate. Alternatively, the venue may for instance be selected which has a higher probability associated with it, as may for instance be represented by the set of probable venue estimates. It will be understood that there may be cases in which the at least two venue comprised by or represented by the set of probable venue estimates have an equal probability associated with them. In this case, the selecting may for instance be performed and/or controlled as disclosed above.

According to an exemplary embodiment of all aspects of the present invention, the method further comprises:
- receiving a positioning request, wherein the obtaining or determining of the coarse location estimate is performed upon reception of the positioning request.

The positioning request may for instance stem from a mobile device. With the positioning request, the mobile device may for instance request its (e.g. current) location to be determined. For enabling the determining of the location of the mobile device, the positioning request may for instance be accompanied or comprise information which enable the determining of the position.

The positioning request may for instance be received from the mobile device, wherein the mobile device requests its current location to be determined, e.g. at least partially based on the positioning request and optionally at least partially based on the information comprised or received together with the positioning request.

The information may for instance be indicative of a GNSS-measurement and/or one or more pieces of fingerprint information. In particular, the one or more pieces of fingerprint information may for instance be gathered by the mobile device prior to the receiving of the positioning request, e.g. by one or more sensors (e.g. radio transceiver(s)) comprised or connectable to the mobile device.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of an example embodiment of a system according to exemplary aspects of the present invention;
- Fig. 2: a flow chart illustrating an example operation, e.g. in the at least one apparatus, e.g. according to Fig. 3, of an example method according to the first exemplary aspect of the present invention; and
- Fig. 3: a schematic block diagram of an example embodiment of an apparatus according to the first exemplary aspect invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

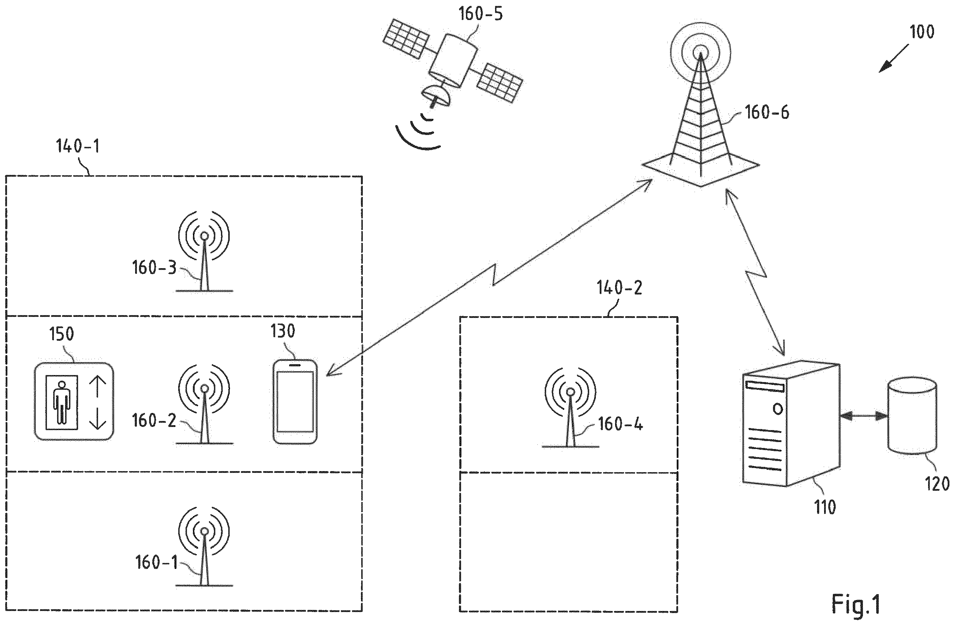

Fig. 1 is a schematic high-level block diagram of a system 100 according to an exemplary aspect of the present invention. System 100 comprises a server 110, which may alternatively be embodied as a server cloud (e.g. a plurality of servers connected e.g. via the internet and providing services at least partially jointly), and a mobile device 130. Further, system 100 comprises radio nodes 160-1 to 160-4 that are installed in the venues 140-1 and 140-1. Inside of venue 140-1, a vertical connector 150, e.g. an elevator enabling vertical connection is exemplary illustrated between floors of the venue 140-1 (e.g. an office building), wherein the floors of the venue 140-1 and 140-2 are illustrated by the dotted horizontal lines. Furthermore, system 100 comprises a satellite 160-5 that enables a GNSS measurement to be performed and/or controlled by mobile device 130 which enables the method according to the first exemplary aspect to be performed and/or controlled. Based on radio signals sent by the radio nodes 160-1 to 160-4, mobile device 130 is enabled to gather (e.g. measure) one or more pieces of fingerprint information.

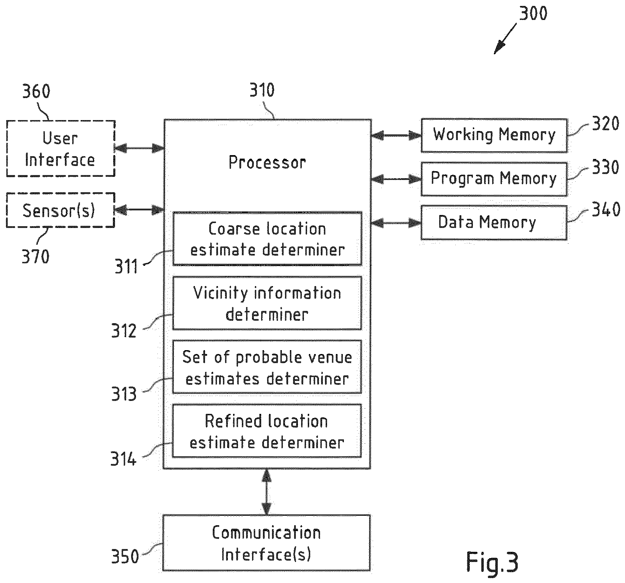

Server 110 is connected or comprises optional database 120, e.g. for storing one or more positioning requests, one or more coarse location estimates, one or more pieces of altitude information (e.g. gathered by sensor(s) 370 of apparatus 300 of Fig. 3), one or more pieces of vicinity information, one or more sets of probable venue estimates, and/or one or more refined location estimates, to name but a few non-limiting examples.

System 100 comprises base station 160-6 of a cellular communication network. The one or more pieces of fingerprint information may for instance be gathered (e.g. measured) further based on respective signals sent by the radio node 160-6.

According to embodiments of the present invention, mobile device 130 requests its location to be determined from server 110, and is provided with a set of probable venues estimates by server 110, so that mobile device 130 is enabled to determine its accurate location based on the provided set of probable venue estimates.

Alternatively, mobile device 130 requests its location to be determined from server 110, and is provided with a refined location estimate by the server 110. The refined location estimate is determined by server 110 based on a set of probable venue estimates that is determined e.g. based on a GNSS measurement and one or more pieces of fingerprint information that are provided the mobile device 130 to the server 110 together with the positioning request with which mobile device 130 has requested its location to be determined from server 110. Further, for determining the set of probable venue estimates, server 110 may for instance utilize an altitude map comprising one or more pieces of vicinity information, wherein the altitude map and the one or more pieces of vicinity information may for instance be stored in the database 120 so that server 110 can get relevant altitude information, e.g. gathered by a barometric sensor of the mobile device 130, and one or more pieces of vicinity information based on a coarse location estimate e.g. that server 110 has determined based on the GNSS measurement and one or more pieces of fingerprint information that are provided the mobile device 130 to the server 110.

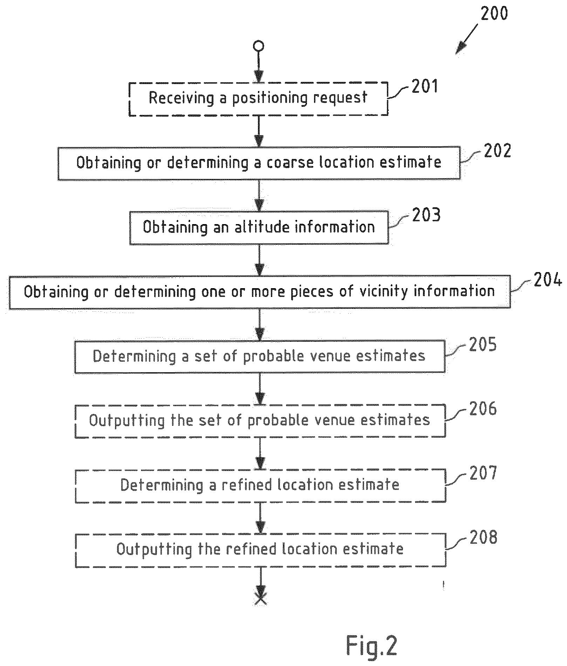

Fig. 2 is a flowchart 200 showing an example embodiment of a method according to the first exemplary aspect of the present invention. This flowchart 200 may for instance be performed by server 110 of Fig. 1. Alternatively, this flowchart 200 may for instance be performed by mobile device 130 of Fig. 1.

In an optional first step 201, a positioning request is received. Step 201 may only be performed and/or controlled in case server 110 of Fig. 1 performs the flowchart 200. In case mobile device 130 performs the flowchart 200, it may not be necessary to receive a positioning request, since the mobile device 130 may for instance determine a refined location estimate for its own location. Of course, mobile device 130 may for instance receive a positioning request from another mobile device (not shown in Fig. 1), which may not have the capabilities to determine its own location and may therefore request its location to be determined by mobile device 130 performing and/or controlling flowchart 200.

In a second step 202, a coarse location estimate is obtained or determined. The coarse location estimate may for instance be obtained by receiving the coarse location estimate, e.g. from another apparatus that is different from the apparatus (e.g. the server 110 or the mobile device 130 of Fig. 1) performing and/or controlling the flowchart 200. In this case, the coarse location estimate may for instance be determined prior to the obtaining of the coarse location estimate, e.g. by the other apparatus which sends the coarse location estimate after the determining to the apparatus performing and/or controlling the flowchart 200. Alternatively, the coarse location estimate may for instance be determined, e.g. based on a GNSS measurement and/or one or more pieces of fingerprint information that may for instance be obtained (e.g. received) so that the coarse location estimate can be determined at least partially based on the GNSS measurement and/or one or more pieces of fingerprint information. In case the flowchart 200 is performed and/or controlled by the mobile device 130 of Fig. 1, the GNSS measurement and/or the one or more pieces of fingerprint information may for instance be gathered by the mobile device 130 as well, so that the gathered GNSS measurement and/or the gathered one or more pieces of fingerprint information can be used to determine the coarse location estimate.

In a third step 203, an altitude information is obtained. The altitude information may for instance be obtained by receiving the altitude information, e.g. from another apparatus e.g. being connected to a database comprising an altitude map. In this case, the altitude information may for instance be derived from such an altitude map at least partially based on the coarse location. Alternatively or additionally (in this case another altitude information may for instance be obtained), the altitude information may for instance be obtained by gathering the altitude information, e.g. by a barometric sensor. Such a barometric sensor (see sensor(s) 370 of apparatus 300 of Fig. 3) may for instance be comprised by the mobile device 130.

In a fourth step 204, one or more pieces of vicinity information are obtained or determined. The one or more pieces of vicinity information may for instance be obtained by receiving the one or more pieces of vicinity information from another apparatus, e.g. an external source (e.g. a server or server cloud) e.g. being connected to a database comprising one or more pieces of vicinity information. Alternatively, the one or more pieces of vicinity information may for instance be determined, e.g. at least partially based on one or more pieces of information that are accessible by the apparatus performing and/or controlling the flowchart 200. Such information may for instance be provided by one or more external sources (e.g. a server or server cloud). In contrast to the aforementioned first case, such information may not be one or more pieces of vicinity information, but be information which can be utilized to determine (e.g. compute) the one or more pieces of vicinity information. In this case, the one or more pieces of vicinity information may for instance be derived from one or more pieces of information that are accessible or provided by one or more external sources, to name but one non-limiting example.

In a fifth step 205, the set of probable venue estimates is determined. The set of probable venue estimates is determined at least partially based on the coarse location estimates obtained or determined in step 202, the altitude information of step 203, and the one or more pieces of vicinity information of step 204.

In an optional sixth step 206, the determined set of probable venue estimates is output, e.g. to server 110 of Fig. 1 in case flowchart 200 is performed and/or controlled by mobile device 130 of Fig. 1, or to mobile device 130 of Fig 1 in case flowchart 200 is performed and/or controlled by server 110 of Fig. 1. Of course, the determined set of probable venue can be output to other entities as well, see arrows pointing to each other between shown entities in Fig. 1, for some non-limiting examples.

In an optional seventh step 207, a refined location estimate is determined, e.g. based on the coarse location estimate of step 202, and further based on the set of probable venue estimates of step 205, which enables to specify the coarse location estimate to be more accurate, e.g. since the set of probable venue estimates may for instance represent a certain part of a venue, e.g. a certain elevator, so that the refined location estimate can be determined to the footprint of this elevator, to name but one exemplary use case.

In an optional eights step 208, the refined location estimate is output, e.g. to server 110 of Fig. 1 in case flowchart 200 is performed and/or controlled by mobile device 130 of Fig. 1, or to mobile device 130 of Fig 1 in case flowchart 200 is performed and/or controlled by server 110 of Fig. 1. Of course, the refined location estimate can be output to other entities as well, see arrows pointing to each other between shown entities in Fig. 1, for some non-limiting examples. In particular, the refined location estimate is output to a mobile device that has requested its location to be determined by the positioning request received in optional step 201.

Fig. 3 is a schematic block diagram of an apparatus 300 according to an exemplary aspect of the present invention, which may for instance represent the mobile device 130 of Fig. 1. Alternatively, the schematic block diagram of the apparatus 300 according to an exemplary aspect of the present invention may for instance represent server 110 of Fig. 1.

Apparatus 300 comprises a processor 310, working memory 320, program memory 330, data memory 340, communication interface(s) 350, an optional user interface 360 and an optional sensor(s) 370.

Apparatus 300 may for instance be configured to perform and/or control or comprise respective means (at least one of 310 to 370) for performing and/or controlling the method according to the first exemplary aspect of the present invention. Apparatus 300 may as well constitute an apparatus comprising at least one processor (310) and at least one memory (320) including computer program code, the at least one memory and the computer program code configured to, with the at least one processor, cause an apparatus, e.g. apparatus 300 at least to perform and/or control the method according to the first exemplary aspect of the invention of the present invention.

Processor 310 may for instance comprise a coarse location estimate determiner 311 as a functional and/or structural unit. Coarse location estimate determiner 311 may for instance be configured to determine a coarse location estimate (see step 202 of Fig. 2). In case in step 202 the coarse location estimate is obtained, the coarse location estimate may for instance be obtained by the functional and/or structural unit of the communication interface(s) 350.

Processor 310 may for instance comprise a vicinity information determiner 312 as a functional and/or structural unit. Vicinity information determiner 312 may for instance be configured to determine one or more pieces of vicinity information (see step 204 of Fig. 2). In case in step 204 a respective piece of vicinity information is obtained, the respective piece of vicinity information may for instance be obtained by the functional and/or structural unit of the communication interface(s) 350. Processor 310 may for instance comprise a set of probable venue estimates determiner 313 as a functional and/or structural unit. Set of probable venue estimates determiner 313 may for instance be configured to determine a set of probable venue estimates (see step 205 of Fig. 2).

Processor 310 may for instance comprise a refined location estimate determiner 314 as an optional functional and/or structural unit. Optional refined location estimate determiner 314 may for instance be configured to determine a refined location estimate (see step 207 of Fig. 2).

Processor 310 may for instance further control the memories 320 to 340, the communication interface(s) 350, the optional user interface 360 and the optional sensor(s) 370.

Processor 310 may for instance execute computer program code stored in program memory 330, which may for instance represent a computer readable storage medium comprising program code that, when executed by processor 310, causes the processor 310 to perform the method according to the first exemplary aspect of the present invention.

Processor 310 (and also any other processor mentioned in this specification) may be a processor of any suitable type. Processor 310 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 310 may for instance be an application processor that runs an operating system.

Program memory 330 may also be included into processor 310. This memory may for instance be fixedly connected to processor 310, or be at least partially removable from processor 310, for instance in the form of a memory card or stick. Program memory 330 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 330 may also comprise an operating system for processor 310. Program memory 330 may also comprise a firmware for apparatus 300.

Apparatus 300 comprises a working memory 320, for instance in the form of a volatile memory. It may for instance be a Random Access Memory (RAM) or Dynamic RAM (DRAM), to give but a few non-limiting examples. It may for instance be used by processor 310 when executing an operating system and/or computer program.

Data memory 340 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 340 may for instance store one or more positioning requests, one or more coarse location estimates, one or more pieces of altitude information (e.g. gathered by sensor(s) 370)), one or more pieces of vicinity information, one or more sets of probable venue estimates, and/or one or more refined location estimates, to name but a few non-limiting examples.

Communication interface(s) 350 enable apparatus 300 to communicate with other entities, e.g. with server 110 of Fig. 1 in case apparatus 300 represents mobile device 130 of Fig. 1, or with mobile device 130 of Fig 1 in case apparatus 300 represents server 110 of Fig. 1. Further, communication interface(s) 350 enable apparatus 300 to communicate with other entities, e.g. radio nodes 160-1 to 160-4 of Fig. 1 of a non-cellular communication network, and/or with base station 160-6 of Fig. lof a cellular communication network The communication interface(s) 350 may for instance comprise a wireless interface, e.g. a cellular radio communication interface and/or a WLAN interface) and/or wire-bound interface, e.g. an IP-based interface, for instance to communicate with entities via the Internet. Further, the communication interface(s) 350 may for instance enable apparatus 300 to gather (e.g. measure) one or more pieces of fingerprint information, e.g. at least partially based on one or more radio signals from one or more radio nodes (e.g. radio nodes 160-1 to 160-4 of Fig. 1) that are observable at a certain location apparatus 300 is (currently) located.

User interface 360 is optional and may comprise a display for displaying information to a user and/or an input device (e.g. a keyboard, keypad, touchpad, mouse, etc.) for receiving information from a user.

Sensor(s) 370 are optional and may for instance comprise a barometric sensor, e.g. to gather altitude information. Sensor(s) 370 may for instance further comprise a GNSS sensor, e.g. a GPS sensor to gather GNSS measurements.

Some or all of the components of the apparatus 300 may for instance be connected via a bus. Some or all of the components of the apparatus 300 may for instance be combined into one or more modules.

The following embodiments shall also be considered to be disclosed:

### Embodiment 1:

An apparatus comprising at least one processor and at least one memory including computer program code, the at least one memory and the computer program code configured to, with the at least one processor, cause the apparatus to at least perform:
- obtaining or determining a coarse location estimate, wherein the coarse location estimate is determined based on a GNSS-measurement and/or one or more pieces of fingerprint information;
- obtaining an altitude information indicative of a representation of an altitude value;
- obtaining or determining one or more pieces of vicinity information based, at least partially, on the coarse location estimate, wherein each vicinity information of the one or more pieces of vicinity information is indicative of a representation of at least one venue altitude information of a venue or of a part of said venue in the vicinity of the coarse location estimate; and
- determining a set of probable venue estimates based, at least partially, on the coarse location estimate, the altitude information and the one or more pieces of vicinity information, wherein the altitude value of the altitude information is compared to the respective one or more representations of altitude values of one or more venues or of one or more parts of said one or more venues as represented by the one or more pieces of vicinity information to enable identification of at least one venue, wherein the set of probable venue estimate is indicative of a location within the identified at least one venue with a certain probability.

### Embodiment 2:

The apparatus according to embodiment 1, wherein at least a part of the one or more pieces of vicinity information comprises or represents footprint information indicative of at least one footprint of a respective venue of the one or more venues or of at least a part of said respective venue.

### Embodiment 3:

The apparatus according to embodiment 2, wherein the at least one footprint of a respective footprint information comprises a two-dimensional and/or three-dimensional representation of the respective venue of the one or more venues or of at least a part of said respective venue, wherein the set of probable venue estimates is further indicative of a more accurate location estimate dependent upon an area as represented by the at least one footprint.

### Embodiment 4:

The apparatus according to any of the preceding embodiments, wherein at least a part of the one or more pieces of vicinity information comprises or represents at least one pair of coordinates of a respective venue of the one or more venues or of at least a part of the said respective venue.

### Embodiment 5:

The apparatus according to embodiment 4, the at least one memory and the computer program code configured to, with the at least one processor, cause the apparatus further to perform:
- determining a ground level of the respective venue based on the at least one pair of coordinates of the respective venue or of at least a part of said respective venue, wherein the ground level is indicative of a representation of an altitude value of the ground level of the respective venue,
   wherein the set of probable venue estimates is determined further based on the ground level of the respective venue of the one or more venues.

### Embodiment 6:

The apparatus according to any of the preceding embodiments, wherein at least a part of the one or more pieces of vicinity information comprises or represents at least one structure comprised by a respective venue of the one or more venues or representing a part of said venue.

### Embodiment 7:

The apparatus according to embodiment 6, wherein at least the part of the respective venue represents the structure of the respective venue.

### Embodiment 8:

The apparatus according to embodiment 6 or embodiment 7, wherein the structure of the respective venue is at least one of the following structures i) to iii):
i) at least one vertical connector of the respective venue connecting at least two different floors of the venue with each other;
ii) a floor of the respective venue or at least a part of the floor; and
iii) a number of spanned floors of the respective venue or of a part of said respective venue.

### Embodiment 9:

The apparatus according to any of the preceding embodiments, wherein the one or more pieces of vicinity information are determined based on information provided by one or more external sources.

### Embodiment 10:

The apparatus according to any of the preceding embodiments, wherein the altitude information and/or the at least one venue altitude information is represented by an absolute or relative altitude value, and optionally, wherein the altitude information is obtained based on information gathered by a barometric sensor, a GNSS sensor and/or an altitude map.

### Embodiment 11:

The apparatus according to embodiment 10, the at least one memory and the computer program code configured to, with the at least one processor, cause the apparatus when determining of the set of probable venue estimate further to perform:
- if the altitude information represents an absolute altitude value:
   determining at least one venue or at least a part of said at least one venue in which a respective mobile device, whose coarse location estimate is obtained or determined, is located based on a comparison of a respective venue altitude information of a respective venue or of a part of said respective venue of each of the one or more pieces of vicinity information with the altitude information (e.g. of a mobile device); and
- if the altitude information represents a relative altitude value:
   determining at least one venue or at least a part of said at least one venue in which a respective mobile device, whose coarse location estimate is obtained or determined, is located based on a comparison of an altitude change as represented by the relative altitude value of the altitude information with a respective venue altitude information of a respective venue or of a part of said respective venue of each of the one or more pieces of vicinity information, and/or with an altitude change as enabled by the respective venue or a part of said respective venue.

### Embodiment 12:

The apparatus according to any of the preceding embodiments, the at least one memory and the computer program code configured to, with the at least one processor, cause the apparatus further to perform:
- outputting the set of probable venue estimates for usage in location-based services, wherein all outdoor areas are excluded from consideration during a localization performed by the location-based services, and/or a search space for determining a location estimate is reduced to an identified venue as represented or comprised by the set of probable venue estimates enabled by the set of probable venue estimates.

### Embodiment 13:

The apparatus according to any of the preceding embodiments, the at least one memory and the computer program code configured to, with the at least one processor, cause the apparatus further to perform:
- determining a refined location estimate based, at least partially, on the set of probable venue estimates and the coarse location estimate.

### Embodiment 14:

The apparatus according to any of the preceding embodiments, in case at least two respective venues or at least two parts of a respective venue that is identified as represented by the set of probable venue estimate,, the at least one memory and the computer program code configured to, with the at least one processor, cause the apparatus further to perform:
- selecting a respective venue based on the at least two respective venues or at least two parts of a respective venue to be the most probable based on a distance from the coarse location estimate to said at least two respective venues or at least two parts of a respective venue.

### Embodiment 15:

The apparatus according to any of the preceding embodiments, further comprising:
- receiving a positioning request, wherein the obtaining or determining of the coarse location estimate is performed upon reception of the positioning request.

### Embodiment 16:

A tangible computer-readable medium storing computer program code, the computer program code when executed by a processor causing an apparatus to perform and/or control:
- obtaining or determining a coarse location estimate, wherein the coarse location estimate is determined based on a GNSS-measurement and/or one or more pieces of fingerprint information;
- obtaining an altitude information indicative of a representation of an altitude value;
- obtaining or determining one or more pieces of vicinity information based, at least partially, on the coarse location estimate, wherein each vicinity information of the one or more pieces of vicinity information is indicative of a representation of at least one height of a venue or of a part of said venue in the vicinity of the coarse location estimate; and
- determining a set of probable venue estimates based, at least partially, on the coarse location estimate, the altitude information and the one or more pieces of vicinity information, wherein the altitude value of the altitude information is compared to the respective one or more representations of heights of one or more venues or of one or more parts of said one or more venues as represented by the one or more pieces of vicinity information to enable identification of at least one venue, wherein the set of probable venue estimate is indicative of a location within the identified at least one venue with a certain probability.

### Embodiment 17:

A tangible computer-readable medium storing computer program code, the computer program code when executed by a processor causing an apparatus to perform and/or control the method of any of the claims 1 to 14.

It is proposed a method to extract additional location information to be fused with GNSS (e.g. GNSS measurement(s))/sensors (e.g. altitude information) from the fusion of coarse location information, altitude data, 3D building footprints and vertical connectors (such as elevators, stairways, escalators, etc.), as represented by the one or more pieces of vicinity information, in the buildings. Based on the coarse location of the device, it is possible to get information about building heights and the locations of the vertical connectors in the building. Furthermore, given the altitude or altitude change information, one can deduce set of probable buildings where a device is located, and in some cases even unambiguously identify exactly in which building or vertical connector device is located.

In example embodiments according to all aspects of the present invention, it is proposed a method, comprising:
1) get the coarse location estimate e.g. of a mobile device;
2) detect sufficiently large altitude or altitude change based on the data from one or more sensors: barometer, GNSS, and altitude map (e.g. representing an altitude information);
3) obtain the 3D footprints and/or (reduced) indoor map, and maximum altitudes/heights of the buildings in the vicinity of the coarse location (e.g. represented by one or more pieces of vicinity information);
4) identify the set of probable buildings/vertical connectors for the location of the device, by comparing the altitude/altitude change with the maximum altitude/height of the buildings/vertical connectors obtained at step/action 3) (e.g. obtained/determined at least partially based on the 3D footprints; represented by a set of probable venue estimates); and
5) use the set of probable buildings obtained/determined at step 4) (e.g. the set of probable venue estimates, e.g. of buildings/vertical connectors for the location of the device that are identified) further in the location estimation process.

Further, more details to the steps/actions 1) to 5) are presented in the following:
In step/action 1), coarse location of the device (e.g. within 100 meters) can be obtained based on e.g. GNSS or basic WiFi localization methods (e.g. WiFi coverage areas).

In step/action 2), altitude change can be computed from barometric data, for example. Absolute altitude can be computed based on GNSS, barometer and altitude map data, for example.

In step/action 3), 3D building footprints mean basic information about the shape of the building, e.g. in the form of a polyhedron whose dimensions match with dimensions of the true building. Furthermore, a 3D building footprint may for instance include the horizontal location coordinates of the building and possibly the altitude of the building, e.g. its first floor's altitude. Altitude means here absolute altitude, for instance altitude with respect to e.g. sea level or some other Earth figure model. Information on the 3D footprints is available for many locations in external sources (such as online map services, to name but one non-limiting example). Information about building vertical connectors, such as 2D location as well as number of spanned floors is available for many locations in external sources (such as online map services, to name but one non-limiting example). Combined together this information may be used to obtain information about the heights of the buildings and vertical connectors. Absolute altitudes of buildings/connectors are not necessarily available within external sources (e.g. online sources), but in principle they can be available as well.

In step/action 4), different methods to utilize this information can be used depending e.g. on whether the absolute altitudes of the buildings/connectors and the device are available or not.

A: Assuming that these absolute altitudes are available. Given the altitude computed from GNSS, barometer, and altitude map, and information about the absolute altitude of nearby building /vertical connectors, a set of probable buildings/connectors may be deduced. Such a set is deduced e.g. simply by excluding the buildings/vertical connectors whose height is lower than the computed altitude change. Even altitude change corresponding to a change of couple of floors may e.g. immediately indicate that person is inside one of the buildings' footprints, but not outdoors (if the altitude profile of the considered outdoor area is known to be flat enough). In the best case, if the device is located in a building that is significantly taller than any other building in the proximity and the device detects a large enough change in the altitude, the building can be identified unambiguously.

In step/action 5), information about the footprints of the buildings where device is potentially located e.g. facilitates the localization of the device in the following ways: a: All outdoor areas may be excluded from consideration during localization process; b: Search space may be reduced to the footprints of the identified probable buildings, to name but a few non-limiting examples.

This may be applied differently depending on the underlying estimation method. For example, if a Kalman Filter is used e.g. for localization, center points of the building footprints may be used as additional location measurements, where uncertainty of the measurement is proportional to the identified buildings. In order to reduce set of probable buildings to one, only the closed footprint to the current location estimate may be considered.

If a particle filter is used e.g. for location estimation, no unambiguous building detection is required but more compared to the particles that are outside of any building footprint.

Information about vertical connectors may be used in a similar way, resulting in even more accurate additional information, as connectors have specific horizontal location and quite small footprint compared to a footprint of a building.

In general, this will result in additional location information and improved localization performance especially in the absence of GNSS location estimates.

Example embodiments of the present invention enable that location is corrected based on the altitude (or altitude change) and altitude/height of the buildings. The method according to the first exemplary aspect of the present invention does not require a detailed indoor map, e.g. a 3D footprint of the building as represented by one or more pieces of vicinity information is enough for location estimation. Such information may for instance already be available or derivable in or from external sources/indexes, whereas indoor maps are available only for very small amount of buildings worldwide.

Thus, the proposed solution according to all aspects of the present invention brings additional information into localization process, which is especially important in the absence of GNSS data, or when such data is unreliable.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, comprising:
- obtaining or determining a coarse location estimate, wherein the coarse location estimate is determined based on a GNSS-measurement and/or one or more pieces of fingerprint information;
- obtaining an altitude information indicative of a representation of an altitude value;
- obtaining or determining one or more pieces of vicinity information based, at least partially, on the coarse location estimate, wherein each vicinity information of the one or more pieces of vicinity information is indicative of a representation of at least one venue altitude information of a venue or of a part of said venue in the vicinity of the coarse location estimate; and
- determining a set of probable venue estimates based, at least partially, on the coarse location estimate, the altitude information and the one or more pieces of vicinity information, wherein the altitude value of the altitude information is compared to the respective one or more representations of altitude values of one or more venues or of one or more parts of said one or more venues as represented by the one or more pieces of vicinity information to enable identification of at least one venue, wherein the set of probable venue estimate is indicative of a location within the identified at least one venue with a certain probability.

2. The method according to claim 1, wherein at least a part of the one or more pieces of vicinity information comprises or represents footprint information indicative of at least one footprint of a respective venue of the one or more venues or of at least a part of said respective venue.

3. The method according to claim 2, wherein the at least one footprint of a respective footprint information comprises a two-dimensional and/or three-dimensional representation of the respective venue of the one or more venues or of at least a part of said respective venue, wherein the set of probable venue estimates is further indicative of a more accurate location estimate dependent upon an area as represented by the at least one footprint.

4. The method according to any of the preceding claims, wherein at least a part of the one or more pieces of vicinity information comprises or represents at least one pair of coordinates of a respective venue of the one or more venues or of at least a part of the said respective venue.

5. The method according to claim 4, further comprising:
- determining a ground level of the respective venue based on the at least one pair of coordinates of the respective venue or of at least a part of said respective venue, wherein the ground level is indicative of a representation of an altitude value of the ground level of the respective venue,
wherein the set of probable venue estimates is determined further based on the ground level of the respective venue of the one or more venues.

6. The method according to any of the preceding claims, wherein at least a part of the one or more pieces of vicinity information comprises or represents at least one structure comprised by a respective venue of the one or more venues or representing a part of said venue.

7. The method according to claim 6, wherein at least the part of the respective venue represents the structure of the respective venue.

8. The method according to claim 6 or claim 7, wherein the structure of the respective venue is at least one of the following structures i) to iii):
i) at least one vertical connector of the respective venue connecting at least two different floors of the venue with each other;
ii) a floor of the respective venue or at least a part of the floor; and
iii) a number of spanned floors of the respective venue or of a part of said respective venue.

9. The method according to any of the preceding claims, wherein the one or more pieces of vicinity information are determined based on information provided by one or more external sources.

10. The method according to any of the preceding claims, wherein the altitude information and/or the at least one venue altitude information is represented by an absolute or relative altitude value, and optionally, wherein the altitude information is obtained based on information gathered by a barometric sensor, a GNSS sensor and/or an altitude map.

11. The method according to claim 10, wherein the determining of the set of probable venue estimate further comprises:
- if the altitude information represents an absolute altitude value:
determining at least one venue or at least a part of said at least one venue in which a respective mobile device, whose coarse location estimate is obtained or
determined, is located based on a comparison of a respective venue altitude information a respective venue or of a part of said respective venue of each of the one or more pieces of vicinity information with the altitude information; and
- if the altitude information represents a relative altitude value:
determining at least one venue or at least a part of said at least one venue in which a respective mobile device, whose coarse location estimate is obtained or
determined, is located based on a comparison of an altitude change as represented by the relative altitude value of the altitude information with a respective venue altitude information of a respective venue or of a part of said respective venue of each of the one or more pieces of vicinity information, and/or with an altitude change of height as enabled by the respective venue or a part of said respective venue.

12. The method according to any of the preceding claims, further comprising:
- outputting the set of probable venue estimates for usage in location-based services, wherein all outdoor areas are excluded from consideration during a localization performed by the location-based services, and/or a search space for determining a location estimate is reduced to an identified venue as represented or comprised by the set of probable venue estimates enabled by the set of probable venue estimates.

13. The method according to any of the preceding claims, further comprising:
- determining a refined location estimate based, at least partially, on the set of probable venue estimates and the coarse location estimate.

14. The method according to any of the preceding claims, wherein in case at least two respective venues or at least two parts of a respective venue that is identified as represented by the set of probable venue estimate, the method further comprises:
- selecting a respective venue based on the at least two respective venues or at least two parts of a respective venue to be the most probable based on a distance from the coarse location estimate to said at least two respective venues or at least two parts of a respective venue.

15. The method according to any of the preceding claims, further comprising:
- receiving a positioning request, wherein the obtaining or determining of the coarse location estimate is performed upon reception of the positioning request.

16. A computer program code, the computer program code when executed by a processor causing an apparatus to perform the method according to any of the claims 1 to 15.

17. An apparatus, the apparatus comprising means for performing and/or controlling the method according to any of the claims 1 to 15.

18. A system, comprising:
- at least one apparatus according to claim 17; and
- at least one mobile device, wherein a positioning request is sent by the at least one mobile device to the at least one apparatus, and wherein the at least one mobile device receives a set of probable location estimates and/or a refined location estimate as a result of the positioning request from the at least one apparatus.
